# EUROPEAN PATENT APPLICATION

(11) **EP 4 386 137 A1**
(43) Date of publication of application: **19.06.2024**
(21) Application number: 22213676.4
(22) Date of filing: 15.12.2022
(51) Int. Cl.: E01C 5/00, E01C 9/08, F16B 5/02, F16B 5/06, F16B 2/12, F16B 37/14

(54) **ASSEMBLY LOCK FOR LOCKING A PROTECTION PLATE TO AN ADJACENT PROTECTION PLATE**

(71) Applicant: MR Teknik ApS, 4180 Sorø (DK)
(72) Inventor: HENRIKSEN, Robert, 4180 Sorø (DK); VESTI THYGESEN, Martin, 4180 Sorø (DK)

(57) **Abstract**

A protection mat assembly (1) comprising at least two protection plates (2) and at least one assembly lock (20) is provided. Each protection plate forms at least one through hole (4), and each assembly lock (20) is configured for locking one of the at least two protection plates (2) to an adjacent of the at least two protection plates (2). Each assembly lock (20) comprises a lower assembly part (22) and an upper assembly part (24). The upper assembly part comprising an upper assembly structure (26) configured for releasable assembly with a lower connection structure (28) of the lower assembly part (22). The lower assembly part (22) forms a lower retainer part (30) and a connector (32) extending upright from an upper surface (34) of the lower retainer part (30). The upper assembly part (24) forms an upper connector part (38) configured to be fixed to the upright extending connector (32) by the upper assembly structure. Each through hole (4) is sized to receive the upright extending connector (32). The upper surface (34) of the lower retainer part (30) is arranged against a lower surface (6) of one of the protection plates (2), and a lower surface of the upper assembly part (24) is arranged against an upper surface (8) of another one of the protection plates (2).

## Description

### INTRODUCTION

The present disclosure relates to a protection mat assembly and to a method of installing the protection mat assembly.

### BACKGROUND

Temporary protection mats are used to provide a stable surface for vehicles and/or persons where no permanent road is provided, such as on construction sites. In particular, temporary protection is used in areas with unstable surface, such as in muddy areas, to thereby provide traction. In addition, temporary protection mats may protect sensitive surfaces from being damaged by vehicles and/or persons moving on the surfaces. Traditionally, a layer of gravel is provided as an underlay for the protection mats to limit the risk of movement of the mats during use. Additionally, the mats are often welded together to minimize the required maintenance of the temporary road. Such welding is both expensive and time consuming.

### SUMMARY

It is an object of embodiments of the disclosure to provide an improved protection mat assembly.

According to a first aspect, the disclosure provides a protection mat assembly comprising at least two protection plates and at least one assembly lock, each protection plate forming at least one through hole, and each assembly lock being configured for locking one of the at least two protection plates to an adjacent of the at least two protection plates, wherein each assembly lock comprises a lower assembly part and an upper assembly part, the upper assembly part comprising an upper assembly structure configured for releasable assembly with a lower connection structure of the lower assembly part, and wherein the lower assembly part forms a lower retainer part and a connector extending upright from an upper surface of the lower retainer part, the upper assembly part forms an upper connector part configured to be fixed to the upright extending connector by the upper assembly structure, and wherein each through hole is sized to receive the upright extending connector, the upper surface of the lower retainer part being arranged against a lower surface of one of the protection plates, and a lower surface of the upper assembly part being arranged against an upper surface of another one of the protection plates.

The protection mat assembly comprises at least two protection plates and at least one assembly lock, where each assembly lock is configured for locking one of the at least two protection plates to an adjacent of the at least two protection plates.

To provide a protection mat assembly of sufficient strength to allow vehicles, including trucks to drive on the assembled protection mat, the protection plates may preferably be steel plates. The protection plates may have a length in the range of 2.0-4.0 metres, and a width in the range of 1.0-3.0 metres. The thickness of the protection plates may be in the range of 5-40 mm, such as 10-35 mm, such as 15-30 mm. It should be understood, that the protection mat assembly be alternative comprise protection plates of another size.

Each protection plate forms at least one through hole. In a preferred embodiment, the protection plates form at least two through holes, where the through holes are arranged at two opposing edges of the protection plate, e.g., along the length of the protection plates. By providing the protection plates so that they each forms two through holes, one at each of two opposing edges, it may be possible to provide an assembled protection mat of a plurality of protection plates, as each protection plate may be locked to an adjacent protection plate along two sides hereof.

The through holes may be arranged at two opposing edges of the protection plate in a section being arranged substantially at the middle of the protection plate. By providing the through holes at a middle section of the plates at an edge hereof, it may be possible to change the direction of the assembled protection mat, as two adjacent protection plates may be rotated relative to each other around the assembly lock to thereby change the direction.

To allow locking of two adjacent protection plates to each other, each assembly lock comprises a lower assembly part and an upper assembly part, where the upper assembly part comprises an upper assembly structure configured for releasable assembly with a lower connection structure of the lower assembly part. In the context of the present disclosure, the term 'upper' refers to a part/element/structure which in use is configured to be arranged at a position above a lower part/element/structure, where the term 'lower' likewise refers to a part/element/structure which in use is configured to be arranged at a position below an upper part/element/structure. It should, however, understood that the upper assembly structure may also be releasable assembled with the lower connection structure of the lower assembly part, if the assembly lock is turned upside down, whereby the upper assembly structure is arranged below the lower assembly part in the use configuration.

The assembly lock is preferably made of steel, i.e., at least one and preferably all parts of the assembly lock is made of steel. To prevent galvanic corrosion, the assembly lock may be made from an alloy similar or identical to the protection plates, or alternatively the assembly lock may have an electro potential below that of the steel plates to avoid corrosion of the protection plates. Alternatively, the assembly lock may have an electro potential above that of the steel plates to avoid corrosion of the assembly lock.

The tensile strength may in one embodiment be selected such that the assembly lock breaks before the protection plate reaches its maximum fatigue load. This may protect the protection plates against destruction during use. It may potentially prevent built-up of excessive tension in the protective plates.

To provide releasable assembly of the upper assembly structure with the lower connection structure, the upper assembly structure and the lower connection structure may form matching shapes to provide a geometrical locking of the upper assembly structure to the lower connection structure, e.g., a snap-fit locking, a frictional locking, or a locking by use of thread.

The upper assembly part forms an upper connector part configured to be fixed to the upright extending connector. In one embodiment, the upper connector part may be formed by a bolt, where the upper assembly structure forms the threading hereof.

The lower assembly part forms a lower retainer part and a connector extending upright from an upper surface of the lower retainer part. By providing a connector extending upright from the upper surface of the lower retainer part, the connector may be arranged to extend through a through hole of each of two adjacently arranged protection plates to thereby facilitate locking of the plates to each other. The two adjacently arranged protection plates may advantageously be arranged so that they overlap each other along abutting edges to thereby at least partly align a through hole of one protection plate with a through hole of an adjacent protection plate.

When arranging the connector extending upright from the upper surface of the lower retainer part through a through hole of a protection plate, the lower retainer part may advantageously be arranged below the protection plate.

The connector and the lower retainer part may in one embodiment be formed in one piece. In an alternative embodiment, the connector and the lower retainer part may be formed as two separate elements which may be joined to form the lower assembly part. As an example, the connector and the lower retainer part may be joined by welding, by a thread connection, or otherwise attached to each other.

To facilitate locking of two adjacently arranged protection plates to each other and to minimise the risk of unwanted separation of the protection plates, each through hole is sized to receive the upright extending connector, when the upper surface of the lower retainer part is arranged against a lower surface of one of the protection plates. After receipt of the upright extending connector, the upper assembly part can be arranged so that the upper assembly structure is assembled with the lower connection structure, and so that a lower surface of the upper assembly part is arranged against an upper surface of another one of the protection plates.

To facilitate releasable assembly of the upper assembly structure with the lower connection structure, one of the upper assembly structure and the lower connection structure may as an example comprise an inner thread, whereas the other one of the upper assembly structure and the lower connection structure may comprise an outer thread. As an example, the upper assembly part may have a bolt-like shape where the upper assembly structure forms an outer thread on a downwardly extending protrusion, where downwardly refers to the direction of the upper assembly part in an assembled configuration of the assembly lock. The lower connector may correspondingly comprise a lower connection structure in the form of an inner thread, which inner thread as an example may be formed in a hollow part of the lower connector. Thus, the lower connector may have the form of a tube with a thread on an inwardly facing surface of the tube. I.e., the lower connection structure may form part of the upright extending connector.

The at least one through hole of each of the protection plates may be non-circular, while the connector in a cross-section transverse to the upright direction may be non-symmetrical. When inserting an upright extending connector having a non-symmetrical cross-section in a through hole being non-circular, rotational movement of the connector may be prevented. This may be of particular relevance in an embodiment, where one of the upper assembly structure and the lower connection structure comprises an inner thread, whereas the other one of the upper assembly structure and the lower connection structure comprises an outer thread, as assembly of the upper assembly structure and the lower connection structure in this embodiment is carried out by rotational movements of the upper assembly structure relative to the lower connection structure. By preventing rotational movement of the connector, assembly of the assembly lock may thus be facilitated.

The connector may comprise an uprightly extending tubular part and a protrusion element extending radially from the tubular part to thereby provide a connector which in a cross-section transverse to the upright direction is non-symmetrical. This may alternatively be achieved by providing a connector having a cross-sectional shape transverse to the upright direction being triangular, square-shaped, oval, hexagonal, circular with one or more protrusions, etc.

In an embodiment, in which the connector comprises an uprightly extending tubular part and a protrusion element extending radially from the tubular part, the height of the protrusion element; i.e. the dimension of the protrusion in the upright direction, may as an example be equal to the thickness of a protection plate or smaller. By providing a height being equal to or smaller that the thickness of a protection plate, rotation of the connector relative to the lower protection plate may be prevented, while still allowing the upper protection plate to rotate relative to the connector, when the connector is inserted into a through hole of each of two adjacently arranged protection plates. When rotating the upper protection plate around the connector and relative to the lower protection plate, it may be possible to change the direction of the assembled protection mat.

By the terms 'upper protection plate' and 'lower protection plate' should be understood the position of two adjacently arranged protection plate in an overlap provided by two adjacently arranged protection plates, where the overlap may allow for insertion of the connector in a through hole of each of the two protection plates.

The at least one through hole of each of the protection plates being non-circular may at an example be triangular, square-shaped, hexagonal, etc. In one embodiment, the at least one through hole may additionally provide the ability of lifting the protection plate, e.g., by inserting a hook in the though hole, thereby allowing lifting of the protection plate from a vehicle to the ground, when installing the protection mat.

In one embodiment, the upper assembly part further comprises an upper retention part, where the upper retention part forms an assembly passage through which the upper connector part may be connectable to the upright extending connector. The upper retention part may as an example by formed by a disc-shaped element having a through hole in the centre, which through hole may form the assembly passage. The diameter of the upper retention part may be equal to or larger than the largest dimension of the at least one through hole in the protection plate to allow the upper retention part to be arranged with a lower surface against the protection plate when assembling the protection mat.

In an embodiment, in which the upper assembly part does not comprise an upper retention part, the upper connector part may have a size in a direction transverse to the upright direction being equal to or larger than the largest dimension of the at least one through hole in the protection plate to allow the upper connector part to be arranged with a lower surface against the protection plate when assembling the protection mat.

An indentation may be formed at an upper surface of the upper retention part, where the assembly passage may be formed in the indentation. In one embodiment, the indentation may be formed by providing the upper retention part with less material thickness at an area of the upper retention part to thereby provide the indentation. In an alternative embodiment, the indentation may be formed by providing the upper retention part with a protrusion; e.g., with an increased thickness at an area of the upper retention part to thereby provide the indentation in an area with no protrusion. As an example, a ring-shaped element forming an inner cavity may be attached to the upper surface of the upper retention part, where the inner cavity forms the indentation.

By providing an indentation at the upper surface of the upper retention part, the upper connector part may be lowered partly into the indentation, when the upper connector part is connected to the upright extending connector via the assembly passage formed in the indentation. By at least partly lowering the upper connector part into the indentation, a smaller part of the upper connector part may extend beyond the upper surface of the upper retention part, whereby a risk of damaging a wheel of a vehicle driving over/hitting the upper connection part may be considerably lowered.

The upper connector part may form an upper surface, where an upper circumferential edge along the upper surface may be chamfered. This may decrease the risk of damaging wheels of a vehicle, as a sharp edge may cut a wheel, especially if a vehicle is turning while a wheel is positioned on an assembly lock. To further decrease the risk of damaging wheels of a vehicle an outer circumferential edge along the upper surface of the upper retention part may likewise be chamfered.

In one embodiment, at least a part of the upper surface of the lower assembly part is magnetic, whereby the lower assembly part may be magnetically attached to a lower surface of a protection plate. This may facilitate locking of two adjacently arranged protection plates to each other, as the lower assembly part may be kept in place by magnetic forces during assembly of the upper assembly structure with the lower connection structure.

At least a part of the assembly lock, such as the upper connector part and/or the upper retention part, may be at least partly covered by a reflective material and/or coloured by an easy visible colour to facilitate visual detection of the assembly lock.

In one embodiment, the assembly lock or at least a part of the upper connector part has a colour which is different from the colour of the protection plates. The protection plates may not be coloured thereby having the colour of steel to facilitate visual detection of the assembly lock.

Additionally, or alternatively, the assembly lock may comprise a light source to facilitate detection of the assembly lock. The light source may further provide the advantage of lighting up the protection mat assembly.

According to a second aspect, the disclosure provides a method of installing a protection assembly according to the first aspect, the method comprising the steps of:
- providing a first protection mat and a second protection mat;
- providing an assembly lock;
- attaching the assembly lock to the first protection mat by inserting the upright connector in the through hole and attaching the upper assembly structure to the lower connection structure;
- arranging the first protection mat at ground level;
- releasing the upper assembly structure from the lower connection structure;
- arranging the second protection mat at ground level so that the upright connector extends through the through hole of the second protection mat; and
- attaching the upper assembly structure to the lower connection structure.

A third protection mat may subsequently be attached to one of the first and second protection mats using the same step. The steps may subsequently be repeated, until the required number of protection plates are arranged to form the protection mat assembly.

It should be understood, that a skilled person would readily recognise that any feature described in combination with the first aspect of the disclosure could also be combined with the second aspect of the disclosure, and vice versa.

The protection mat assembly according to the first aspect of the disclosure is very suitable for performing the method steps according to the second aspect of the disclosure. The remarks set forth above in relation to the protection mat assembly are therefore equally applicable in relation to the method.

As an alternative, the method of installing a protection mat assembly may comprise the steps of:
- providing a first protection mat and a second protection mat;
- providing an assembly lock;
- inserting the upright connector in the through hole;
- attaching the lower connection structure to the first protection mat by a magnet;
- arranging the first protection mat at ground level;
- removing the magnet;
- arranging the second protection mat at ground level so that the upright connector extends through the through hole of the second protection mat; and
- attaching the upper assembly structure to the lower connection structure.

According to a third aspect, the disclosure provides an assembly lock configured for locking a protection plate to an adjacent protection plate, the assembly lock comprising a lower assembly part and an upper assembly part, the upper assembly part comprising an upper assembly structure configured for releasable assembly with a lower connection structure of the lower assembly part, and wherein the lower assembly part forms a lower retainer part and a connector extending upright from an upper surface of the lower retainer part, the upper assembly part forms an upper connector part configured to be fixed to the upright extending connector by the upper assembly structure.

The connector may comprise an uprightly extending tubular part and a protrusion element extending radially from the tubular part to provide a connector which in a cross-section transverse to the upright direction is non-symmetrical.

It should be understood, that a skilled person would readily recognise that any feature described in combination with the first aspect and the second aspect of the disclosure could also be combined with the third aspect of the disclosure, and vice versa.

### BRIEF DESCRIPTION OF THE DRAWING

The accompanying drawings are included to provide a further understanding of embodiments and are incorporated into and forms part of this specification. The drawings illustrate embodiments and together with the description explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
Fig. 1 illustrates a protection mat assembly in an installed configuration;
Fig. 2 is a perspective view of an assembly lock;
Fig. 3 is a perspective view of an upper connector part;
Fig. 4 is a side-view of an assembly lock;
Fig. 5 is a cross-sectional view of an assembly lock;
Fig. 6 illustrates an assembly lock from below;
Fig. 7 illustrates a protection plate; and
Fig. 8 is a cross-sectional view of a protection mat assembly in an installed configuration.

### DETAILED DESCRIPTION

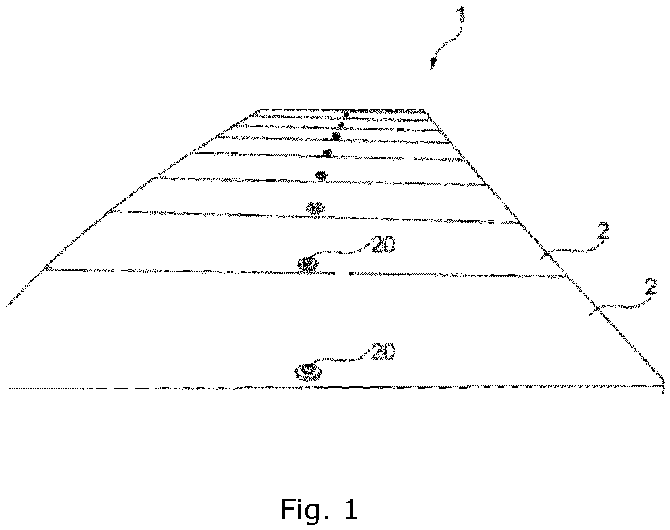

Fig. 1 illustrates a protection mat assembly 1 in an installed configuration. The protection mat assembly 1 comprises, in the illustrated embodiment, a plurality of protection plates 2 and a plurality of assembly locks 20.

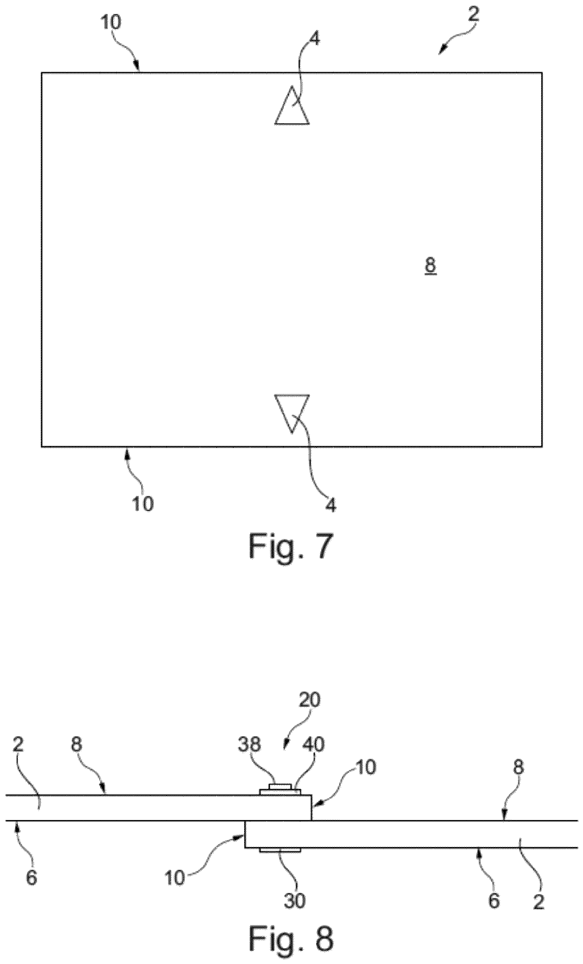

Each protection plate 2 forms at least one through hole 4. As illustrated in Figs. 1 and 7, the protection plates 2 in the illustrated embodiment, each comprises two through holes 4. The protection plates 2 are preferably steel plates having a lower surface 6 which is arranged against the ground in the installed configuration, and an opposite upper surface 8. The upper and lower surfaces 6, 8 of the protection plates 2 may be substantially identical, whereby the protection plates 2 can be installed upside-down.

As illustrated in Fig. 7, the through holes 4 are arranged at two opposing edges 10 of the protection plate in a section being arranged substantially at the middle of the protection plate 2 along the length of the protection plate.

The two adjacently arranged protection plates 2 are in the illustrated embodiment arranged so that they overlap each other along abutting edges 10 to thereby at least partly align a through hole 4 of one protection plate 2 with a through hole 4 of an adjacent protection plate 2 (see also Fig. 8).

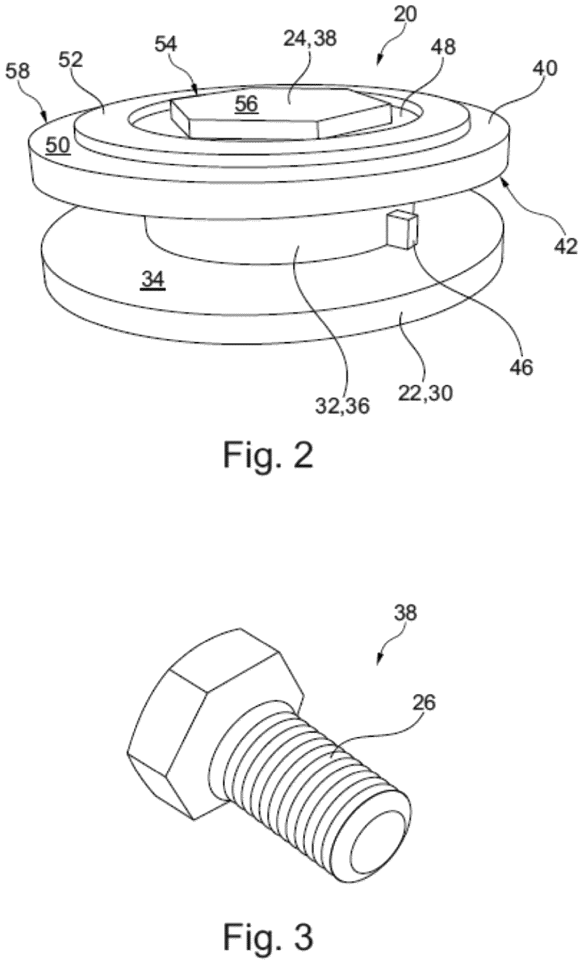

Each assembly lock 20 is configured for locking a protection plate 2 to an adjacent protection plates 2. Details of the assembly lock 20 are illustrated in Figs. 2-6.

Fig. 2 is a perspective view of an assembly lock 20. Each assembly lock 20 comprises a lower assembly part 22 and an upper assembly part 24, where the upper assembly part 24 in the installed configuration is arranged above the protection plates 2, and the lower assembly part 22 in the installed configuration is arranged partly under the protection plates 2.

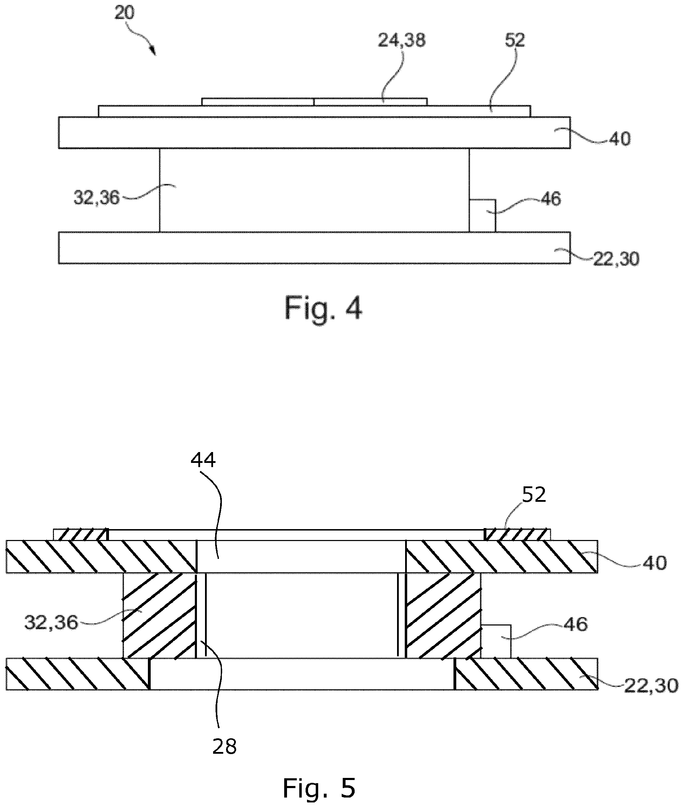

The upper assembly part 24 comprises an upper assembly structure 26 (see Fig. 3) configured for releasable assembly with a lower connection structure 28 (see Fig. 5) of the lower assembly part 22.

To facilitate releasable assembly of the upper assembly structure 24 with the lower connection structure 22, the lower connection structure 28 comprises, in the illustrated embodiment, an inner thread 28, whereas the upper assembly structure 26 comprises an outer thread 26. As illustrated, the upper assembly part 24 has a bolt-like shape where the upper assembly structure 26 forms an outer thread on the downwardly extending protrusion, where downwardly refers to the direction of the upper assembly part 24 in an assembled configuration. The lower assembly part 22 correspondingly comprises a lower connection structure 28 in the form of an inner thread 28 (see Fig. 5).

The lower assembly part 22 forms a lower retainer part 30 and a connector 32 extending upright from an upper surface 34 of the lower retainer part 30. In the illustrated embodiment, the lower retainer part 30 is formed by a disc-shaped element, whereas the connector 32 comprises a tubular element 36. The lower connection structure 28 in the form of an inner thread 28 is formed on an inwardly facing surface of the tubular element 36.

The upper assembly part 24 forms a bolt-like upper connector part 38 (see Fig. 3) configured to be fixed to the upright extending connector 32 via the upper assembly structure 26 in the form of the outer thread. In the illustrated embodiment, the upper assembly part 24 further comprises an upper retention part 40 in the form of a disc-shaped element.

Each through hole 4 of the protection plates 2 is sized to receive the upright extending connector 32, when the upper surface 34 of the lower retainer part 30 is arranged against a lower surface 6 of one of the protection plates 2. When the connector 32 is inserted through a through hole 4 of two adjacently arranged protection plates 2, a lower surface 42 of the upper retention part 40 is arranged against an upper surface 8 of another one of the protection plates 2. Two assembled protection plates 2 are illustrated in Fig. 8.

The upper retention part 40 forms an assembly passage 44 (see Fig. 5) through which the upper connector part 38 is connectable to the upright extending connector 32.

As illustrated in Fig. 7, the through holes 4 of the protection plates 2 are triangular; i.e., non-circular, while the connector 32 in a cross-section transverse to the upright direction is non-symmetrical. As illustrated in Fig. 2, the non-symmetrical shaped is achieved by a connector 32 comprising an uprightly extending tubular part 36 and a protrusion element 46 extending radially from the tubular part 36 to thereby provide a connector 32 which in a cross-section transverse to the upright direction is non-symmetrical.

Since the lower connection structure 28 comprises an inner thread, whereas the upper assembly structure 26 comprises an outer thread, assembly of the upper assembly structure 28 and the lower connection structure 26 is carried out by rotational movements of the upper assembly structure 28 relative to the lower connection structure 26. When inserting the upright extending connector 32 having a non-symmetrical cross-section in a through hole 4 being triangular; i.e., non-circular, rotational movement of the connector 32 may be prevented during assembly by rotational movement, thereby facilitating the assembly.

The height of the protrusion element 46 is equal to or lower than the thickness of the protection plate 2, thereby allowing rotation of the upper protection plate 2 relative to the connector 32, when the connector 32 is inserted into a through hole 4 of each of two adjacently arranged protection plates 2. When rotating the upper protection plate 2 around the connector 32 and relative to the lower protection plate 2, it is possible to change the direction of the assembled protection mat 1.

An indentation 48 is formed at the upper surface 50 of the upper retention part 40. In the illustrated embodiment, the indentation 49 is formed by attaching a ring-shaped element 52 to the upper surface 50 of the upper retention part 40. The ring-shaped element 52 forms an inner cavity 48 which forms the indentation 48. The ring-shaped element 52 encircles the assembly passage 44. The upper connector part 38 is lowered partly into the indentation 48, when the upper connector part 38 is connected to the upright extending connector 32 via the assembly passage 44, whereby a risk of damaging a wheel of a vehicle driving over/hitting the upper connection part 38 may be considerably lowered.

The upper circumferential edge 54 along the upper surface 56 of the upper connector part 38 is chamfered. This may decrease the risk of damaging wheels of a vehicle. To further decrease the risk of damaging wheels of a vehicle, the outer circumferential edge 58 along the upper surface 50 of the upper retention part 38 is likewise be chamfered.

Fig. 3 is a perspective view of an upper connector part 38. An outer thread 26 is formed on the downwardly extending protrusion, where downwardly refers to the direction of the upper connector part 38 in an assembled configuration of the assembly lock 20 inserted in the protection mat assembly 1. The lower assembly part 22 correspondingly comprises a lower connection structure 28 in the form of an inner thread 28 (see Fig. 5)

Fig. 4 is a side-view of the assembly lock 20 also illustrated in Fig. 2. As illustrated in Fig.2, the connector 32 comprises a tubular part 36 extending uprightly and a protrusion element 46 extending radially from the tubular part 36 to thereby provide a connector 32 which in a cross-section transverse to the upright direction is non-symmetrical. The protrusion element 46 has a height being smaller than the height of the tubular part 36, whereby the connector 32 above the protrusion element 46 has a cross-section transverse to the upright direction being symmetrical.

Fig. 5 is a cross-sectional view of an assembly lock 20 illustrating the lower connection structure 28 in the form of an inner thread. The upper assembly part 24 comprises an upper connector part 38 (not shown) and an upper retention part 40. The upper retention part 40 is formed by a disc-shaped element 40 forming the assembly passage 44 in the middle hereof.

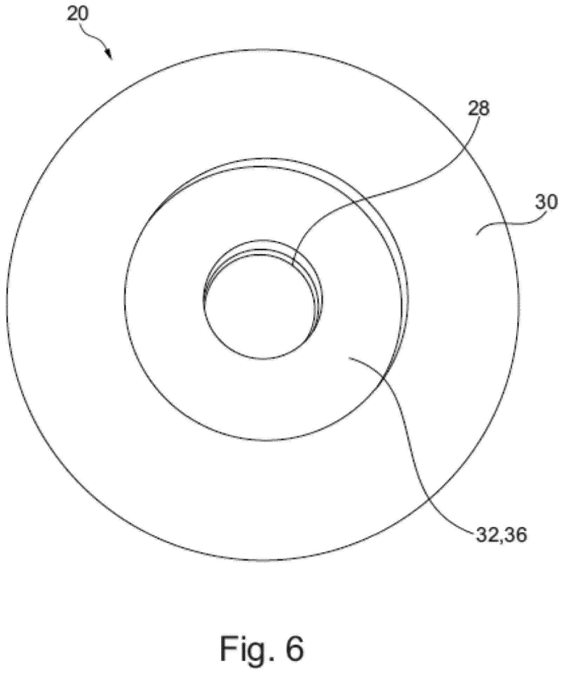

Fig. 6 illustrates an assembly lock 20 from below. The lower assembly part 22 comprises a lower retainer part 30 in the form of a disc-shaped element and a connector 32 extending upright from the lower retainer part 30. The connector 32 comprises a tubular part 36 and a protrusion element 46 (see Fig. 4) extending radially from the tubular part 36. The lower assembly part comprises a lower connection structure 28 in the form of an inner thread.

Fig. 7 illustrates a protection plate 2 comprising two triangular through holes 4. The through holes 4 are arranged at two opposing edges 10 of the protection plate 2 in a section being arranged substantially at the middle of the protection plate 2. By providing the through holes 4 at a middle section of the protection plates 2 at an edge 10 hereof, it is possible to change the direction of the assembled protection mat 1, as two adjacent protection plates 2 can be rotated relative to each other around the assembly lock 20 to thereby change the direction.

Fig. 8 is a cross-sectional view of a protection mat assembly 1 in an installed configuration. The protection mat assembly 1 comprises two adjacently arranged protection plates 2 and an assembly lock 20. The two adjacently arranged protection plates 2 are arranged with an overlap 60 along abutting edges 10 of each of the protection plated 2 to thereby at least partly align a through hole 2 of the upper protection plate 2 with a through hole of the adjacent protection plate 2 which in the overlap is the lower protection plate 2.

The lower assembly part 22 forms a lower retainer part 30 and a connector 32 extending upright from an upper surface of the lower retainer part. In the cross-section only the lower retainer part 30 is visible. The connector 32 extends through a through hole 4 of each of two adjacent protection plates 2 to thereby facilitate locking of the protection plates 2 to each other.

When arranging the connector 32 extending upright from the upper surface of the lower retainer part 30 through the through holes 4 of the protection plates 2, the lower retainer part 30 is arranged below the lower protection plate 2 in the overlap 60.

## Claims

1. A protection mat assembly (1) comprising at least two protection plates (2) and at least one assembly lock (20), each protection plate forming at least one through hole (4), and each assembly lock (20) being configured for locking one of the at least two protection plates (2) to an adjacent of the at least two protection plates (2), wherein each assembly lock (20) comprises a lower assembly part (22) and an upper assembly part (24), the upper assembly part comprising an upper assembly structure (26) configured for releasable assembly with a lower connection structure (28) of the lower assembly part (22), and wherein the lower assembly part (22) forms a lower retainer part (30) and a connector (32) extending upright from an upper surface (34) of the lower retainer part (30), the upper assembly part (24) forms an upper connector part (38) configured to be fixed to the upright extending connector (32) by the upper assembly structure, and wherein each through hole (4) is sized to receive the upright extending connector (32), the upper surface (34) of the lower retainer part (30) being arranged against a lower surface (6) of one of the protection plates (2), and a lower surface of the upper assembly part (24) being arranged against an upper surface (8) of another one of the protection plates (2).

2. The protection assembly (1) according to claim 1, wherein one of the upper assembly structure (26) and the lower connection structure (28) comprises an inner thread, and the other one of the upper assembly structure (26) and the lower connection structure (28) comprise an outer thread.

3. The protection assembly (1) according to any of the preceding claims, wherein the at least one through hole (4) of the protection plates (2) is non-circular, and wherein the connector (32) in a cross-section transverse to the upright direction is non-symmetrical.

4. The protection assembly (1) according to claim 3, wherein the connector (32) comprises an uprightly extending tubular part (36) and a protrusion element (46) extending radially from the tubular part (36).

5. The protection assembly (1) according to any of the preceding claims, wherein the upper assembly part further comprising an upper retention part (40), the upper retention part (40) forming an assembly passage (44) through which the upper connector part (38) is connectable to the upright extending connector (32).

6. The protection assembly according to claim 5, wherein an indentation (48) is formed at an upper surface (50) of the upper retention part (40), the assembly passage (44) being formed in the indentation (48).

7. The protection assembly (1) according to claim 6, wherein a ring-shaped element (32) forming an inner cavity is attached to the upper surface (52) of the upper retention part (40), the inner cavity forming the indentation (48).

8. The protection assembly (1) according to any of the preceding claims, wherein the upper connector part (38) forms an upper surface (56), and wherein an upper circumferential edge (54) along the upper surface (56) is chamfered.

9. The protection assembly (1) according to any claim 5-8, wherein an outer circumferential edge (58) along the upper surface (50) of the upper retention part (40) is chamfered.

10. The protection assembly (1) according to any of the preceding claims, wherein the lower connection structure (28) forms part of the upright extending connector (32).

11. The protection assembly (1) according to any of the preceding claims, wherein at least a part of the upper surface (34) of the lower assembly part (22) is magnetic.

12. The protection assembly (1) according to any of the preceding claims, wherein the protection plates (2) each comprises two through holes (4), the through holes (4) being arranged at two opposing edges (10) of the protection plate (2) in a section being arranged substantially at the middle of the protection plate (2).

13. An assembly lock (20) configured for locking a protection plate (2) to an adjacent protection plate (2), the assembly lock (20) comprising a lower assembly part (22) and an upper assembly part (24), the upper assembly part comprising an upper assembly structure (26) configured for releasable assembly with a lower connection structure (28) of the lower assembly part (32), and wherein the lower assembly part (22) forms a lower retainer part (30) and a connector (32) extending upright from an upper surface (34) of the lower retainer part (30), the upper assembly part (24) forms an upper connector part (38) configured to be fixed to the upright extending connector (32) by the upper assembly structure.

14. The assembly lock (20) according to claim 13, wherein the connector (32) comprises an uprightly extending tubular part (36) and a protrusion element (46) extending radially from the tubular part (36).

15. A method of installing a protection assembly (1) according to any of claims 1-12, the method comprising the steps of:
- providing a first protection mat (2) and a second protection mat (2);
- providing an assembly lock (20);
- attaching the assembly lock (20) to the first protection mat (2) by inserting the upright connector (32) in the through hole (4) and attaching the upper assembly structure (26) to the lower connection structure (28);
- arranging the first protection mat (2) at ground level;
- releasing the upper assembly structure (26) from the lower connection structure (28);
- arranging the second protection mat (2) at ground level so that the upright connector extends (32) through the through hole (4) of the second protection mat (2); and
- attaching the upper assembly structure (26) to the lower connection structure (28).
